# FASCICULE DE BREVET EUROPEEN

(11) **EP 3 558 624 B1**
(45) Date de publication et mention de la délivrance du brevet: **16.03.2022**
(21) Numéro de dépôt: 17837977.2
(22) Date de dépôt: 22.12.2017
(51) Int. Cl.: B29C 48/025, B29C 48/07, B29C 48/12, B29C 48/16, B29C 48/21, B29C 48/25, B29C 48/30, B29C 48/49

(54) **INSTALLATION D'EXTRUSION COMPORTANT UNE TÊTE D'EXTRUSION PERFECTIONNÉE**
EXTRUSIONSAUSRÜSTUNG MIT VERBESSERTEM EXTRUDERKOPF
EXTRUSION EQUIPMENT COMPRISING AN IMPROVED EXTRUSION HEAD

(30) Priorité: 22.12.2016 FR 1663256
(43) Date de publication de la demande: 30.10.2019
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2017/053834
(87) Numéro de publication internationale: WO 2018/115797

(56) Documents cités:
- EP-A1- 0 528 560
- WO-A2-2011/119309
- WO-A2-2011/119324
- DE-A1- 2 619 983
- JP-A- 2000 117 813
- JP-A- 2005 254 464

## Description

L'invention concerne le domaine de l'extrusion des mélanges d'élastomères destinés à la fabrication des pneumatiques. Plus particulièrement, elle concerne la fabrication de profilés complexes coextrudés à base de mélanges d'élastomères de différentes compositions.

De manière connue, la fabrication des profilés complexes par extrusion d'au moins deux mélanges d'élastomères de compositions différentes, ou coextrusion, utilise au moins deux extrudeuses. Chaque extrudeuse est formée d'un corps cylindrique ou fourreau qui est fixe à l'intérieur duquel se trouve une vis coaxiale à l'axe longitudinal du fourreau et entraînée en rotation autour de celui-ci. Elle a pour fonction d'homogénéiser un mélange caoutchouteux qui y est introduit et de le pousser vers une filière de sortie. Pour un produit complexe, la filière de sortie reçoit plusieurs mélanges d'élastomères de compositions différentes et détermine le profil de la bande de caoutchouc. Ce profil est défini par une lame profilée fixe coopérant avec un rouleau rotatif ou avec une paroi fixe.

De nos jours, on fait de plus en plus appel à l'utilisation de produits complexes pour diminuer le nombre de poses successives de produits en assemblage, diminuer les coûts et améliorer la qualité du produit final. On préfère obtenir ces produits complexes par coextrusion car ce procédé assure une meilleure cohésion des différents composants entre eux. Or, le nombre de composants qui forment un profilé complexe a tendance à augmenter, ce qui rend complexe l'outillage de production et l'encombrement de celui-ci.

On connait ainsi le document WO 2015/028166 qui décrit une installation de coextrusion utilisant cinq extrudeuses agencées en parallèle et servant à la fabrication d'une bande de roulement pour pneumatique. On obtient ainsi un profilé complexe par coextrusion de différents mélanges qui convergent, via cinq couloirs différents vers une tête d'extrusion commune munie en sortie d'un dispositif de profilage. Les extrudeuses sont toutes agencées du côté opposé à celui de sortie du produit. De par la convergence des flux de mélanges d'un seul côté, l'encombrement de la tête d'extrusion est très important et l'installation doit comporter des mécanismes de verrouillage de la tête d'extrusion très robustes pour contrer la pression d'extrusion.

Une solution à ce problème est décrite dans le document JP 4053687 qui propose de disposer les différentes extrudeuses de part et d'autre de la filière de sortie produit complexe coextrudé. L'ensemble de coextrusion selon ce document comprend une tête d'extrusion fixe munie d'une filière de sortie en partie centrale inférieure et de trois extrudeuses montées fixes deux à droite et une à gauche de la filière. Les efforts encaissés par la tête d'extrusion sont certes moindres que dans le document précédent de par l'agencement plus judicieux des extrudeuses. Toutefois, la tête d'extrusion de ce document comprend des canaux de préformage très profonds qui relient les extrudeuses à la filière. De ce fait, l'ensemble d'extrusion de ce document produit beaucoup de chutes lors du changement des mélanges. De surcroît, la perte de charge étant proportionnelle à la longueur des canaux de transfert, s'avère très importante dans l'ensemble de coextrusion de ce document.

On connaît également du document US 7 311 505 une autre installation d'extrusion comprenant une tête d'extrusion fixe munie d'une filière de sortie en partie centrale inférieure et de quatre extrudeuses montées fixes deux à droite et deux à gauche de la filière. La tête d'extrusion comprend par ailleurs trois parties mobiles qui sont amenées à se déplacer en fin d'opération pour ouvrir la tête et permettre d'accéder aux canaux profonds qui relient les extrudeuses à la filière d'extrusion. Etant plus judicieusement réalisée que celle du document précédent, la structure de la tête d'extrusion de ce document s'avère assez complexe et doit faire appel à différents mécanismes et actionneurs pour assurer l'ouverture et la fermeture de différentes parties qui composent la tête d'extrusion notamment dans un but de nettoyage. Lors du changement du profilé coextrudé, on doit respecter l'ordre d'arrivée des mélanges dans la tête d'extrusion, ce qui implique une mise en régime de chaque extrudeuse avant le démarrage d'une nouvelle opération.

Un problème non résolu par les documents de l'état de la technique est donc la possibilité de changer l'ordre d'affectation des extrudeuses en fonction des dimensions de la section transversale du profilé avec une installation de coextrusion donnée et permettant d'extruder des mélanges d'élastomères de natures différentes sans mêler les divers mélanges introduits dans une même tête d'extrusion.

Les appareils et procédés de coextrusion selon le préambule des revendications 1 et 12 annexées sont connus à titre exemplaire de DE 26 19 983 A1, EP 0 528 560 A1, JP 2000 117813 A, WO 2011/119324 A2 et WO 2011/119309 A2.

Un objectif de l'invention est de remédier aux inconvénients des documents précités et d'apporter une solution originale dans la conception de la tête d'extrusion permettant de réduire de façon notable les chutes lors du changement de mélanges qui composent un profilé coextrudé et d'obtenir un profilé coextrudé conforme aux formes et dimensions souhaitées en évitant des problèmes de gonflement du profilé en sortie.

Cet objectif est atteint par l'invention ,selon les revendications 1 et 12 annexées, qui propose une installation pour fabriquer une bande de profilé à base de plusieurs mélanges d'élastomères de composition différente par coextrusion, comportant au moins deux extrudeuses d'alimentation en mélange d'élastomères d'une tête d'extrusion, la tête d'extrusion comprenant un ensemble d'au moins deux plaques disposées côte-à-côte, chaque plaque comportant au moins une cavité permettant de canaliser le mélange en provenance d'une extrudeuse vers un orifice de sortie, caractérisée en ce que lesdites plaques sont agencées sensiblement transversalement à la direction de sortie des flux de mélanges desdites extrudeuses.

La tête d'extrusion comporte plusieurs plaques disposées côte à côte comportant chacune une cavité formant un canal de transfert d'un mélange d'élastomères en provenance d'une extrudeuse pour le transférer vers un orifice de sortie de profilage, par exemple une filière d'extrusion. Par plaque on comprend une pièce de forme générale parallélépipédique large et peu épaisse. Chaque plaque est agencée avec l'une de ses faces (par face on comprend la surface ayant plus grandes dimensions que celles de la tranche ou du profil) sensiblement transversalement à la direction de sortie du flux de mélange de l'extrudeuse correspondante, direction qui est parallèle à l'axe longitudinal de l'extrudeuse.

L'ensemble des plaques de la tête d'extrusion est agencé de manière à ce que la face d'une plaque qui reçoit le ou les mélange(s) entrant(s) soit sensiblement perpendiculaire au flux du ou des mélanges entrants. Une plaque présente ainsi un orifice d'entrée du flux, coaxial à la direction d'arrivée du flux entrant, orifice qui communique avec un canal de transfert vers la sortie de ce flux de mélange, canal qui est pratiqué dans l'épaisseur de la plaque. Le canal de transfert est un conduit comportant au moins une paroi plane parallèle au plan d'une des faces de la plaque et sensiblement perpendiculaire à l'axe de l'orifice d'entrée du flux de mélange dans la plaque. Chaque plaque de la tête d'extrusion permet ainsi une évacuation du flux de mélange sortant qui est orienté par les canaux de transfert de la plaque à environ 90° par rapport à la direction d'arrivée du flux de mélange entrant tel que reçu à la sortie de la vis de chaque extrudeuse.

Ainsi, la plaque est agencée sensiblement transversalement à la direction du flux, on comprend que la plaque est agencée de manière à faire face, avec sa surface ayant plus grandes dimensions que celle de la tranche, au flux de mélange qui arrive donc sensiblement perpendiculairement au plan des plaques, et à changer brusquement l'orientation de celui-ci d'un angle égal à celui de son agencement. Un tel angle est d'environ 90° avec une tolérance de 20°. Selon l'ivention tel angle est compris entre 70 et 110°. On comprend que la plaque présente un orifice d'entrée qui communique directement avec l'orifice de sortie de l'extrudeuse, immédiatement à l'extrémité de la vis, et avec un canal d'écoulement du mélange, réalisé dans l'épaisseur de la plaque, canal qui forme un certain angle, en l'occurrence un angle compris entre 70 et 110° avec la direction d'écoulement du flux entrant en provenance d'une extrudeuse.

La tête d'extrusion en plaques de l'invention permet donc un écoulement vers la filière de sortie du mélange dans le plan des plaques et une alimentation perpendiculairement au plan de ces mêmes plaques, pour une compacité accrue de l'installation.

Par ailleurs, dans les installations de l'état de la technique, le mélange véhiculé entre le noyau et les filets de la vis est compacté vers l'extrémité de sortie et avant l'orifice de sortie de l'extrudeuse dans un canal de grande longueur (on comprend selon l'axe longitudinal de l'extrudeuse) correspondant au diamètre extérieur de la vis (environ 4 fois la hauteur du canal). Les produits à former étant généralement de section beaucoup plus petite, il est nécessaire de réduire progressivement la section des canaux jusqu'à l'obtention de la géométrie finale dans la filière. Le caractère viscoélastique du caoutchouc provoque d'autant plus de gonflement en sortie que la convergence est rapide, ce qui pose des problèmes de maitrise de la géométrie. A l'inverse, une convergence plus lente (donc dans des canaux plus longs) limite le gonflement mais a pour conséquence d'augmenter la perte de charge et de diminuer le débit de la machine.

Dans l'installation d'extrusion de l'invention, il n'y a plus d'étape de compactage en bout de vis avec une augmentation de section qu'il faut réduire ensuite. L'évacuation à environ 90° de l'extrudat en sortie de la vis de l'extrudeuse, sans passer par une voûte ou un cône de convergence vers l'avant intermédiaire, permet d'obtenir une certaine continuité de la section d'écoulement des chenaux de la vis jusqu'aux canaux de la tête d'extrusion et la filière. On arrive ainsi à un ratio gonflement/perte de charge qui est donc bien meilleur que dans les solutions de l'état de la technique.

Ainsi, les demanderesses ont constaté, lors des tests effectués en laboratoire, qu'un cheminement plus court sans changer de section de passage du mélange entre la sortie de l'extrudeuse et l'entrée dans la tête d'extrusion permet de réduire les sollicitations apportées au mélange et de ce fait le gonflement en sortie de la filière.

L 'orifice de sortie d'une extrudeuse communique sans changer de direction ni de section de sortie avec l'orifice d'entrée dans la cavité d'une plaque. Cela permet, lorsqu'il y besoin de faire communiquer la sortie de l'extrudeuse avec une plaque via des parois intermédiaires, de le faire sans perte de charge.

Avantageusement, lesdites plaques sont planes et parallèles entre elles. Cela permet une construction et un usinage simplifiés de l'ensemble.

De préférence, lesdites cavités forment des canaux s'étendent dans une direction parallèle aux plans des plaques et perpendiculaires aux axes longitudinaux des extrudeuses.

L'axe longitudinal d'une extrudeuse est confondu avec l'axe longitudinal du fourreau et est parallèle à la direction du flux de mélange débité par l'extrudeuse. Un tel agencement permet au mélange entrant dans la tête d'extrusion d'être canalisé vers la sortie, dans le plan de la plaque, et de conférer aux canaux des formes diverses sur l'étendue de celui-ci. De tels canaux sont creusés dans l'épaisseur des plaques qu'ils longent en direction de la filière d'extrusion, ce qui permet de réduire l'encombrement axial de la tête d'extrusion et obtenir ainsi une construction très compacte de celle-ci.

Une telle installation de coextrusion dans laquelle l'agencement des différentes extrudeuses se fait de part et d'autre d'une tête d'extrusion en plaques selon l'invention, qui permet une sortie à environ 90° du profilé extrudé par rapport à la direction d'arrivée des flux de mélanges, présente une structure robuste, tout en étant d'une compacité notable.

Avantageusement, au moins une plaque comporte un orifice traversant permettant de relier l'orifice de sortie d'une extrudeuse à la cavité d'une plaque adjacente à la première.

Cela permet le passage d'un mélange d'élastomères en provenance d'une extrudeuse à travers un orifice de la première plaque jusque dans le canal de transfert d'une plaque adjacente. Ainsi, avec un jeu de plaques et d'orifices appropriés on peut changer l'ordre d'arrivée des mélanges dans la tête d'extrusion et on organise leur transfert vers la sortie via la filière d'extrusion, tout en conservant la disposition initiale des extrudeuses.

Une telle tête d'extrusion comportant un jeu de plaques avec un agencement préétabli de canaux d'écoulement et d'orifices traversants permet une flexibilité accrue dans la conception de la tête d'extrusion. Cela permet également de conserver les paramètres de fonctionnement initiaux des extrudeuses et donc un gain de productivité.

De préférence, lesdites plaques sont amovibles et sont tenues ensemble sur un support commun. Cela permet de changer facilement les plaques en fonction du profilé à fabriquer.

Avantageusement, ledit support et lesdites plaques forment une tête d'extrusion interchangeable qui est reliée directement aux orifices de sortie des extrudeuses. Ainsi, l'extrémité de la vis de chaque extrudeuse arrive sensiblement au niveau de l'orifice d'entrée correspondant dans la tête d'extrusion. Par sensiblement on comprend au ras de l'orifice d'entrée correspondant dans la tête d'extrusion ou à une distance idéalement très faible de quelques mm ou au moins inférieur au diamètre de l'extrudeuse, et sans réduction sensible de la section de celui-ci. Dans une telle configuration, il n'y a plus de canal de transfert entre l'extrudeuse et la tête d'extrusion. Ainsi, lors du remplacement de celle-ci, l'installation est prête à démarrer un nouveau cycle de fabrication.

De préférence, la tête d'extrusion est mobile en translation entre une position entrée dans un support de l'installation et une position sortie à l'extérieur de celui-ci. Cela permet une extraction rapide de la tête d'extrusion en vue de son remplacement avec une nouvelle tête adaptée au nouveau profilé à fabriquer.

On munit également l'installation des moyens de fixation rapide de la tête d'extrusion sur ledit support.

Avantageusement, les extrudeuses sont agencées de part et d'autre de la tête d'extrusion. Cela permet de mieux équilibrer les efforts encaissés par la tête d'extrusion.

Dans un mode avantageux de réalisation de l'invention, l'installation comprend quatre extrudeuses agencées deux par deux de part et d'autre de la tête d'extrusion et cette dernière comprend quatre plaques amovibles munies chacune d'au moins un canal de transfert du mélange en provenance d'une desdites extrudeuses vers une filière d'extrusion. Cela permet de repartir les extrudeuses de part et d'autre d'une tête d'extrusion très compacte.

L'invention a également pour objet un procédé de fabrication de bande de profilé à base de plusieurs mélanges d'élastomères de composition différente par coextrusion à l'aide d'au moins deux extrudeuses d'alimentation en mélange d'élastomère d'une tête d'extrusion, caractérisé en ce que :
- on choisit un jeu d'au moins deux plaques disposées côte-à-côte chaque plaque comportant au moins une cavité permettant de canaliser le mélange en provenance d'une extrudeuse dédiée vers un orifice de sortie et on agence lesdites plaques sensiblement transversalement à la direction de sortie du flux de mélange desdites extrudeuses au sein de la tête d'extrusion;
- on réalise l'extrusion de la bande de produit profilé.

De préférence, l'on agence lesdites plaques par rapport auxdites extrudeuses de manière à ce que l'orifice de sortie d'une extrudeuse communique sans changer de direction avec l'orifice d'entrée dans la cavité d'une plaque.

Avantageusement, au moins une plaque comporte un orifice traversant permettant de relier l'orifice de sortie d'une extrudeuse à la cavité d'une plaque adjacente.

De préférence, on retire la tête d'extrusion de l'installation et on la remplace avec une autre tête comportant un jeu des plaques différent de la première.

L'invention sera mieux comprise grâce à la suite de la description, qui s'appuie sur les figures suivantes :
- la figure 1 est une vue schématique en coupe transversale de l'installation de l'invention selon un mode de réalisation en position de travail ;
- la figure 2 est une vue schématique en coupe transversale de l'installation selon l'invention en position de repos ;
- la figure 3 est une vue en perspective de l'installation de l'invention selon un autre mode de réalisation en position de repos;
- la figure 4 est une vue à plus petite échelle de l'installation de la figure 3 illustrée en position de travail ;
- la figure 5 est une vue de dessus de l'installation de la figure 3 en position de repos ;
- la figure 6 est une vue de dessus de l'installation de la figure 3 en position de travail ;
- la figure 7 est une vue en coupe transversale de la tête d'extrusion de l'invention selon encore un autre mode de réalisation ;
- la figure 8 est une vue éclatée des composants de la tête d'extrusion de la figure 7.

Sur les différentes figures, les éléments identiques ou similaires portent la même référence. Leur description n'est donc pas systématiquement reprise.

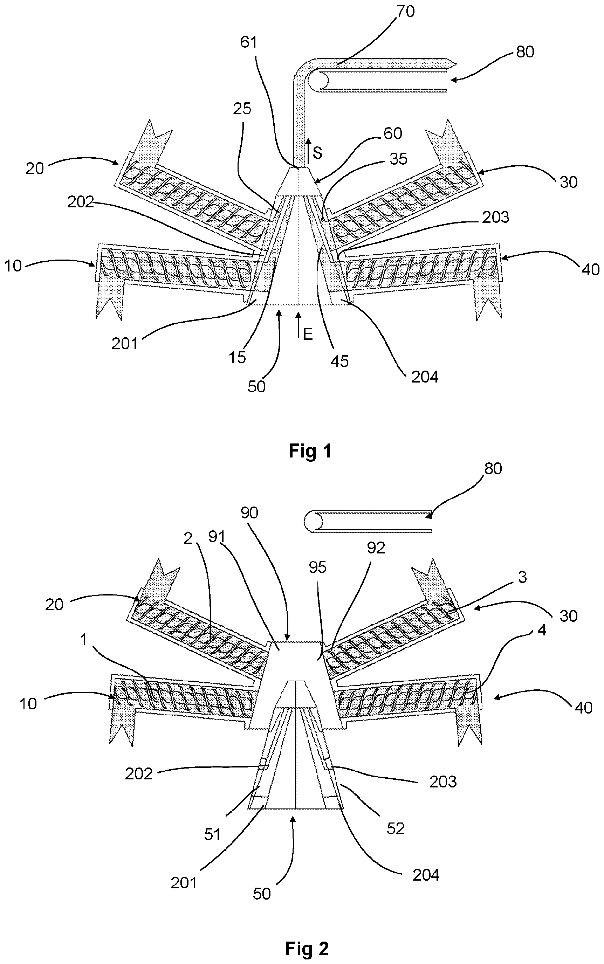

Dans les figures 1 et 2, l'installation d'extrusion 1 comprend quatre extrudeuses 10, 20, 30, 40, une tête d'extrusion 50 et une filière d'extrusion 60. La tête d'extrusion 50 relie les sorties des extrudeuses 10, 20, 30, 40 à une filière d'extrusion 60 qui permet la mise en forme du profilé. La bande de profilé complexe 70 est réalisée par la coextrusion des quatre profilés simples en provenance des différentes extrudeuses qui sont rassemblés au niveau de l'extrémité de sortie 61. La bande de profilé complexe 70 est ensuite acheminée par un dispositif de transport, tel un convoyeur 80.

Tel que généralement connu, les différents mélanges extrudés par les extrudeuses 10, 20, 30 et 40 traversent la tête d'extrusion 50 sans se mixer et sont laminés et mis en forme par la filière 60.

De tels mélanges d'élastomères différents sont, à titre d'exemple les mélanges à base d'élastomères ou de gomme utilisés pour créer un ensemble de bande de roulement tels : un premier matériau en caoutchouc naturel à 100% pour réaliser une sous-couche avec un, puis un deuxième matériau pour réaliser la bande de roulement en caoutchouc synthétique à 100% suivis d'un troisième et quatrième matériau pour réaliser les flancs composé d'un mélange de caoutchouc naturel/caoutchouc synthétique (20% à 80% de caoutchouc naturel). Par mélanges d'élastomères différents envoyés dans une tête d'extrusion selon l'invention on comprend donc qu'au moins deux mélanges différents arrivent dans la tête en provenance d'au moins deux extrudeuses différentes. Des mélanges identiques, tel un troisième et un quatrième mélange ayant une même composition peuvent aussi être reçus dans la tête d'extrusion en provenance d'autres extrudeuses.

Les différents mélanges en provenance des extrudeuses 10, 20, 30, 40 traversent la tête d'extrusion 50 via des canaux de transfert sans se mixer et sont mis en forme par la filière 60. Plus particulièrement, la tête d'extrusion 50 comprend un ensemble comportant plusieurs plaques 201, 202, 203, 204 montées côte-à-côte, chaque plaque comportant au moins une cavité permettant de canaliser le mélange en provenance d'une extrudeuse 10, 20, 30, 40 dédiée vers la filière d'extrusion 60.

Selon l'invention lesdites plaques 201, 202, 203, 204 sont agencées sensiblement transversalement à la direction de sortie des flux des mélanges desdites extrudeuses 10, 20, 30, 40. Par plaque agencée sensiblement transversalement à la direction du flux, on comprend que la plaque comporte une face sensiblement plane agencée de manière à faire face au flux de mélange perpendiculairement à celui-ci. Le flux de mélange est reçu à travers la plaque via un orifice d'entrée qui est coaxial avec l'orifice de sortie du mélange de l'extrudeuse. Chaque plaque comporte également un canal de transfert du flux de mélange qui est un conduit comportant au moins une paroi plane parallèle au plan de la face de la plaque dans lequel il est pratiqué et qui est sensiblement perpendiculaire à l'axe de l'orifice d'entrée du flux de mélange dans la plaque. Un tel agencement permet de changer brusquement l'orientation du flux de mélange sortant de la tête, par rapport à la direction du flux de mélange entrant, d'un angle égal à celui de son agencement. Un tel angle est d'environ 90° avec une tolérance de 20°. L'évacuation à environ 90° de l'extrudat en sortie de la vis de l'extrudeuse permet d'obtenir une certaine continuité de la section d'écoulement des chenaux de la vis jusqu'aux canaux de la tête d'extrusion et la filière. On arrive ainsi à un ratio gonflement/perte de charge qui est donc bien meilleur que dans les solutions de l'état de la technique.

Dans le mode de réalisation illustré aux figures 1 et 2, l'angle d'inclinaison des plaques 202, 203 par rapport au flux de mélange sortant des extrudeuses 20 et 30, flux qui est dirigé selon l'axe longitudinal de chaque extrudeuse en étant parallèle à celui-ci, est d'environ 70°. L'angle d'inclinaison des plaques 201, 204 par rapport au flux de mélange sortant des extrudeuses 10 et 40, flux qui est dirigé selon l'axe longitudinal de chaque extrudeuse en étant parallèle à celui-ci, est d'environ 110°. Dans ce mode de réalisation, chaque plaque comprend un canal de transfert 15, 25, 35, 45 qui est creusé dans l'épaisseur de la plaque et forme une cavité de celle-ci orientée de manière à ce que le flux de mélange arrivant transversalement à la plaque par un orifice d'entrée coaxial à celui de sortie de l'extrudeuse puisse s'écouler dans une direction transversale à celle du flux d'entrée en direction de la filière de sortie 60.

Selon un aspect très avantageux de l'invention, les extrudeuses 10, 20, 30, 40 débitent directement dans une tête d'extrusion 50 interchangeable. Ainsi, la tête d'extrusion est reliée directement aux extrudeuses sans qu'il y ait de canal de transfert de mélange d'élastomère entre les deux.

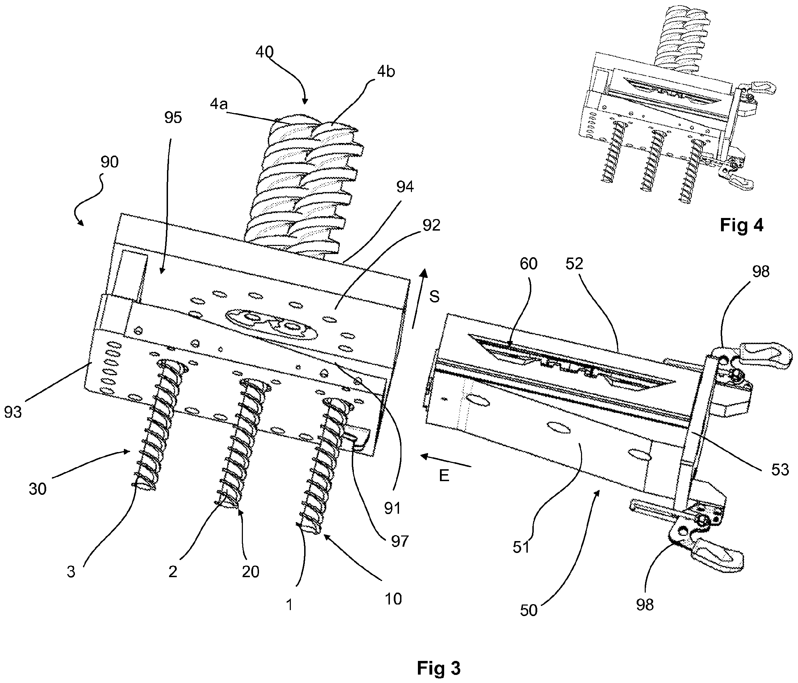

Tel que mieux visible à la figure 3, les extrudeuses 10, 20, 30, 40 sont agencées de part et d'autre d'un support commun 90 et sont fixées à celui-ci. A titre d'exemple, chaque fourreau d'extrudeuse est fixé aux parois latérales 93, 94 du support 90 moyennant un flasque muni des fixations à vis et joints d'étanchéité. Le support 90 est un bloc de forme générale prismatique à l'intérieur duquel se trouve un évidement dont la forme et les dimensions correspondent à celles de la tête d'extrusion 50 et formant un logement 95 pour celle-ci. Plus particulièrement selon l'invention, les extrémités des vis 1, 2, 3 des extrudeuses 10, 20 et 30 arrivent sensiblement au niveau du plan qui constitue l'interface entre la face interne 91 du support 90 et la face externe 51 de la tête d'extrusion 50. Il en est de même pour les extrémités des vis 4a, 4b de l'extrudeuse 40 qui arrivent sensiblement au niveau du plan qui constitue l'interface entre la face interne 92 du support 90 et la face externe 52 de la tête d'extrusion 50. Plus précisément, les extrémités des vis arrivent à l'entrée des ouvertures traversantes qui sont pratiquées dans les parois latérales 93, 94 du support 90 pour permettre le passage des mélanges en provenance des orifices de sortie des extrudeuses vers les orifices d'entrée à l'intérieur de la tête d'extrusion 50. La direction de déplacement de la tête d'extrusion 50 par rapport au support 90, indiquée par la flèche E sur la figure 1, est parallèle à celle de sortie du produit profilé via la filière d'extrusion 60, indiquée par la flèche S sur la même figure. La filière d'extrusion 60 est solidaire de la tête d'extrusion 50 et est montée mobile avec cette dernière par rapport au support 90 de l'installation.

Ainsi, en fin d'opération d'extrusion lorsque l'on souhaite changer de produit profilé coextrudé, on éloigne la tête d'extrusion 50 du support 90 et on la remplace avec une autre tête d'extrusion propre au nouveau produit profilé. Les extrudeuses 10, 20, 30, 40 sont vidées ayant débité chacune la totalité du mélange lors de l'opération précédente, et la nouvelle tête d'extrusion étant en place, on peut commencer sans attendre une nouvelle opération de coextrusion.

Une installation comprenant une tête d'extrusion de l'invention permet ainsi de faciliter le changement de produit profilé à fabriquer, la machine étant propre en fin d'opération, on n'a donc plus besoin de vider les canaux de transfert qui composent les installations de l'état de la technique.

Selon un aspect avantageux de l'invention, la tête d'extrusion 50 est un ensemble unitaire ou bloc que l'on introduit à l'intérieur du support 90 et l'on extrait de ce dernier par un mouvement de translation dans une direction de déplacement préétablie. La filière d'extrusion 60 complète l'ensemble formant tête d'extrusion 50. Dans le mode de réalisation illustré à la figure 3, la direction de déplacement en translation de la tête d'extrusion 50 est perpendiculaire aux axes longitudinaux des extrudeuses 10 et 40. On peut ainsi utiliser, pour plus de facilité, un bras robotisé qui saisit la tête d'extrusion 50 et la déplace par rapport au support 90 en vue de son remplacement par une nouvelle. La direction de déplacement de la tête d'extrusion 50 par rapport au support 90, indiquée par la flèche E sur la figure 1, est perpendiculaire à celle de sortie du produit profilé, indiquée par la flèche S sur la même figure.

Selon un aspect important de l'invention, au moins l'une des parois latérales 51 et 52 de la tête d'extrusion 50 et au moins l'une des parois internes 91 et 92 du support 90 sont inclinées et font un même angle par rapport à un plan parallèle au plan contenant l'axe de déplacement de la tête d'extrusion 50. De préférence, un tel angle d'inclinaison est faible de façon à limiter les efforts de verrouillage en place de la tête d'extrusion, il est de préférence inférieur à 30°. Pour des angles inférieurs à15° environ (selon le coefficient de frottement du contact qui dépend du matériau des pièces en contact), le coincement mécanique peut participer au maintien de l'outillage. Toutefois, on évite de descendre en deçà de 3° car le positionnement de la tête d'extrusion est plus difficile à maitriser (en ce qui concerne la mise en correspondance du cylindre de la vis avec l'orifice passant de la tête d'extrusion). Dans un mode préféré, on choisit une inclinaison de 6°.

Dans le mode représenté aux figures 3 à 6, de manière à simplifier la construction, seulement la paroi 51 de la tête d'extrusion et la paroi correspondante 91 du support sont inclinées, les autres parois étant, elles parallèles à la direction de déplacement de la tête d'extrusion. Cette construction à parois inclinées permet d'assurer l'étanchéité entre les parois internes du support et celles externes de la tête d'extrusion lors du mouvement d'introduction de celle-ci dans son logement au sein du support. Lorsque la tête d'extrusion est arrivée dans sa position de fonctionnement à l'intérieur du support 90, elle est verrouillée en position à l'aide des moyens de fixation rapide 99, par exemple en utilisant des brides 98 de fixation à genouillère agencées entre chaque bord latéral de la paroi frontale 53 de la tête d'extrusion 50 venant en prise avec des crochets 97 fixés aux parois latérales 93 et 94 du support 90.

Dans une variante de réalisation, non visible sur les figures, au moins l'une des parois latérales 93, 94 du support 90 est mobile en translation dans une direction perpendiculaire à celle de déplacement de la tête d'extrusion 50 lors de son introduction à l'intérieur du support. Ainsi, une fois la tête d'extrusion installée à l'intérieur du support, on approche l'une et/ou l'autre des parois latérales du support pour assurer l'étanchéité entre le support et la tête d'extrusion.

Les extrudeuses qui alimentent la tête d'extrusion sont des extrudeuses mono-vis ou bi-vis de type connu qui comportent donc une ou deux vis sans fin entraînées en rotation par un moteur à l'intérieur d'un fourreau. De préférence au moins l'une des extrudeuses bi-vis est une extrudeuse volumétrique du type pompe bi-vis comportant deux vis contrarotatives à filets interpénétrés et profils conjugués entraînées en rotation par des moteurs, dans des sens contraires, à l'intérieur d'un fourreau. Dans un mode préféré de réalisation de l'invention toutes les extrudeuses 10, 20, 30, 40 sont des extrudeuses bi-vis volumétriques qui assurent un débit constant pour permettre une bonne précision du profilé obtenu par coextrusion.

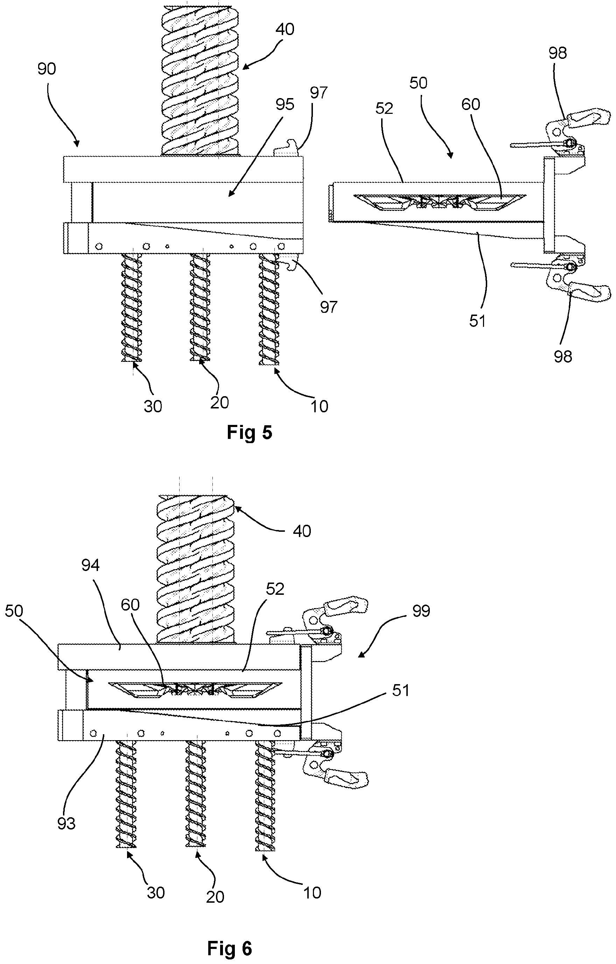

Les figures 5 et 6 illustrent par des vues de dessus l'installation de la figure 3. La tête d'extrusion 50 est en train d'être introduite dans le logement 95 du support 90 à la figure 5 et elle est en place à l'intérieur du support 90 à la figure 6.

Avantageusement, dans les modes de réalisation illustrés aux figures 3 à 8, la tête d'extrusion 50 comprend un ensemble formé par un empilage de plaques parallèles étant toutes perpendiculaires à l'axe longitudinal des extrudeuses 10, 20, 30, 40 et donc à la direction d'alimentation en mélange d'élastomères. Les mélanges arrivent ainsi par des canaux séparés dans la filière d'extrusion 60 où ils forment le produit profilé coextrudé.

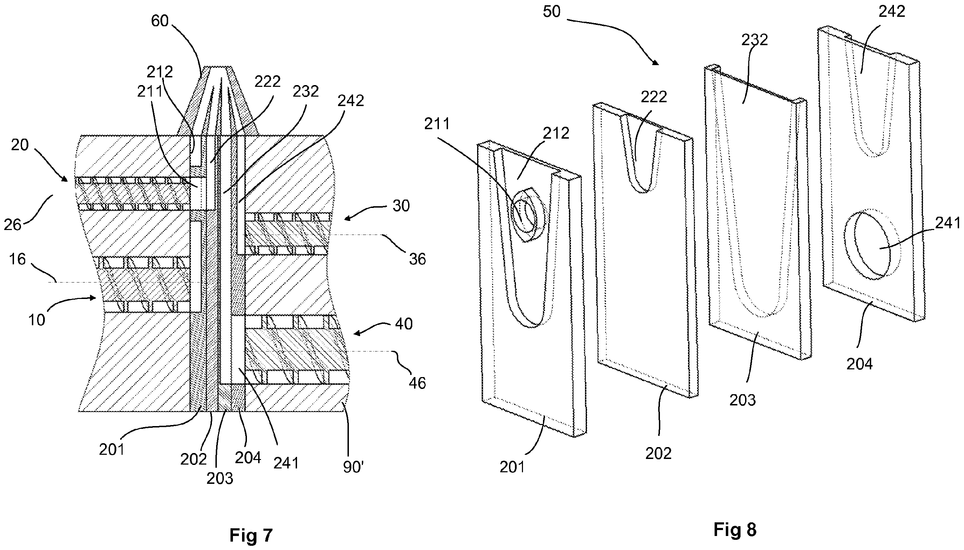

Les figures 7 et 8 illustrent, de manière simplifiée, un autre mode de réalisation de la tête d'extrusion 50 illustrant un tel ensemble formé par un empilage de plaques parallèles entre elles et perpendiculaires toutes à l'axe longitudinal des extrudeuses 10, 20, 30, 40. Pour plus de clarté, les parois latérales formant support de la tête d'extrusion ont été omises sur les figures 7 et 8. La tête d'extrusion 50 comprend un empilage de quatre plaques planes parallèles entre elles et s'étendant avec leur face dont la surface a la plus grande dimension dans des plans perpendiculaires aux axes longitudinaux16, 26, 36, 46 des extrudeuses 10, 20, 30, 40. Les plaques de la tête d'extrusion sont munies de canaux de transfert de mélange d'élastomères en direction d'une filière de sortie, canaux qui longent les plaques en étant pratiqués dans l'épaisseur de chaque plaque, parallèlement au plan des faces (et non pas des tranches) des plaques, en direction d'une filière de sortie 60. Un tel agencement permet de réduire la longueur des canaux de transfert entre les extrémités de sortie des extrudeuses et la filière d'extrusion et de diminuer ainsi la perte de charge subie par le mélange extrudé.

Dans l'exemple illustré aux figures 7 et 8, la première plaque 201 comprend une cavité 212 creusée dans l'épaisseur de la paroi de la plaque, la cavité 212 ayant une forme évasée vers le haut en direction de la filière d'extrusion à partir d'une base de forme circulaire de diamètre égal au diamètre de l'orifice de sortie du fourreau de l'extrudeuse 10. La cavité 212 forme ainsi un premier canal de transfert de mélange en provenance de l'extrudeuse 10. La première plaque 201 comprend également un orifice traversant 211 qui communique avec la deuxième extrudeuse 20 pour transférer le mélange débité par celle-ci au canal de transfert pratiqué dans la deuxième plaque 202.

La deuxième plaque 202 comprend une cavité 222 creusée dans l'épaisseur de la paroi de la plaque, la cavité 212 ayant une forme évasée vers le haut en direction de la filière d'extrusion à partir d'une base de forme circulaire de diamètre égal au diamètre de l'orifice de sortie du fourreau de l'extrudeuse 20 et à celui de l'orifice 211. La cavité 222 forme ainsi un deuxième canal de transfert de mélange en provenance de l'extrudeuse 20.

La quatrième plaque 204 comprend une cavité 242 creusée dans l'épaisseur de la paroi de la plaque, la cavité 242 ayant une forme évasée vers le haut en direction de la filière d'extrusion à partir d'une base de forme circulaire de diamètre égal au diamètre de l'orifice de sortie du fourreau de l'extrudeuse 30. La cavité 242 forme ainsi un quatrième canal de transfert de mélange en provenance de l'extrudeuse 30. La quatrième plaque 204 comprend également un orifice traversant 241 qui communique avec la sortie de la quatrième extrudeuse 40 pour transférer le mélange débité par celle-ci dans le canal de transfert pratiqué dans une troisième plaque 203.

La troisième plaque 203 comprend une cavité 232 creusée dans l'épaisseur de la paroi de la plaque, la cavité 232 ayant une forme évasée vers le haut en direction de la filière d'extrusion à partir d'une base de forme circulaire de diamètre égal au diamètre de l'orifice de sortie du fourreau de l'extrudeuse 40 et de l'orifice traversant 241. La cavité 232 forme ainsi un troisième canal de transfert de mélange en provenance de l'extrudeuse 40.

Bien entendu, comme dans l'exemple des figures 3 à 6, les plaques 201, 202, 203, 204 sont tenues ensemble par des parois latérales 51, 52 et une entretoise 53 de manière à former une tête d'extrusion sous forme de bloc ou ensemble unitaire. Une telle tête d'extrusion est appliquée de manière étanche à la sortie des extrudeuses 10, 20, 30, 40. Dans une variante avantageuse de l'invention, le support 90 est en deux parties, au moins l'une 90' étant mobile axialement afin de prendre en étau la tête d'extrusion 50 et appliquer les orifices de sortie des extrudeuses de manière étanche sur les faces correspondantes en vis-à-vis de la tête d'extrusion 50. Ainsi, une fois la tête d'extrusion installée à l'intérieur du support, on approche l'une des parois latérales du support pour assurer l'étanchéité entre le support et la tête d'extrusion.

Une telle tête d'extrusion réalisée sous forme de plaques interchangeables permet, par un agencement judicieux d'orifices traversants et de canaux de transfert entre les différentes plaques de conserver la disposition initiale des extrudeuses et de ne changer que les plaques de la tête d'extrusion, étant elle-même interchangeable.

En effet, dans les machines de coextrusion de l'état de la technique, l'ordre d'empilage des bandes extrudées doit suivre l'ordre d'agencement des extrudeuses dans l'installation. Ceci car chaque voie de sortie d'extrudeuse débouche dans des couloirs de transfert supportés par des éléments qui font partie intégrante de la machine. Leur changement implique des opérations de démontage très fastidieuses. De ce fait, on préfère garder la configuration initiale de la machine et adapter le régime de l'extrudeuse au nouveau profilé. Une telle nouvelle mise en régime de l'extrudeuse est très consommatrice de temps.

De surcroît, avec la solution de l'invention, on regroupe toutes les parties dimensionnelles de la machine dans un bloc extractible. Un tel bloc est réalisé à l'aide de plaques planes parallèles entre elles et perpendiculaires à la direction de sortie du flux de mélange et munies d'ouvertures et de canaux de transfert permettant d'inverser l'ordre d'arrivée des mélanges dans la filière d'extrusion. Cette solution permet à l'installation d'être très flexible, en s'adaptant à une grande diversité de profilés coextrudés, même des plus complexes, tout en réduisant les temps d'attente et de préparation de l'installation ou de ses composants.

En fonctionnement, on commence par choisir une tête d'extrusion appropriée adaptée au profilé à réaliser par coextrusion. Une telle tête d'extrusion 50 est réalisée en préalable en empilant des plaques parallèles entre elles 201, 202, 203, 204 et parallèles aux faces internes des parois latérales 51, 52 de la tête d'extrusion et en les fixant ensemble par exemple moyennant une fixation à vis. La tête d'extrusion est placée dans un four pour la réchauffer et l'amener à la température de fonctionnement de l'installation.

La tête d'extrusion est ensuite saisie par exemple par un bras robotisé (non visible sur les dessins) et introduite dans le logement 95 du support 90 de l'installation, tel qu'illustré à la figure 4. On continue d'introduire la tête d'extrusion jusqu'à ce qu'elle soit bloquée axialement de par l'inclinaison de sa paroi latérale et de celle du support. A ce moment, les orifices d'entrée dans la tête d'extrusion et ceux de sortie des extrudeuses communiquent de manière étanche et on peut démarrer l'opération d'extrusion.

On peut agencer plus de quatre extrudeuses agencées de part et d'autre de la tête d'extrusion, en augmentant le nombre de canaux de transfert et/ou des orifices traversants et/ou des plaques amovibles en conséquence, au moins deux d'entre elles travaillant avec des mélanges différents et certaines d'autres avec un même mélange d'élastomères.

## Revendications

1. Installation pour fabriquer une bande de profilé à base de plusieurs mélanges d'élastomères de composition différente par coextrusion, comportant au moins deux extrudeuses (10, 20, 30, 40) d'alimentation en mélange d'élastomères d'une tête d'extrusion (50), la tête d'extrusion comprenant un ensemble d'au moins deux plaques (201, 202, 203, 204) disposées côte-à-côte, chaque plaque comportant au moins une cavité possédant un orifice d'entrée qui communique avec un canal de transfert (15, 25, 35, 45, 212, 222, 232, 242) permettant de canaliser le mélange en provenance d'une extrudeuse (10, 20, 30, 40) vers une filière d'extrusion (60) qui permet la mise en forme du profilé, ladite installation étant **caractérisée en ce que** lesdites plaques (201, 202, 203, 204) présentent chacune une face, ayant plus grandes dimensions que la tranche de ladite plaque, qui est agencée sensiblement transversalement à la direction de sortie des flux de mélanges desdites extrudeuses (10, 20, 30, 40), direction qui est parallèle à l'axe longitudinal de l'extrudeuse correspondante et qui coïncide avec la direction de l'orifice d'entrée et donc avec la direction d'écoulement du flux de mélange entrant, de sorte que la plaque reçoit le flux de mélange par ladite face ayant plus grandes dimensions que la tranche et oriente ledit flux dans le canal de transfert (15, 25, 35, 45, 212, 222, 232, 242) correspondant, lequel canal de transfert, creusé dans l'épaisseur de la plaque, forme un angle compris entre 70 degrés et 110 degrés avec ladite direction d'écoulement du flux entrant et longe la plaque en direction de la filière d'extrusion (60).

2. Installation selon la revendication 1, **caractérisée en ce que** l'orifice de sortie d'une extrudeuse communique directement sans changer de direction ni de section de sortie avec l'orifice d'entrée dans la cavité d'une plaque.

3. Installation selon l'une des revendications 1 ou 2, **caractérisée en ce que** lesdites plaques (201, 202, 203, 204) sont planes et parallèles entre elles.

4. Installation selon l'une des revendications 1 à 3, **caractérisée** et en ce que lesdites cavités forment des canaux de transfert s'étendant dans une direction parallèle aux plans des plaques et en ce que lesdits canaux de transfert s'étendent dans une direction perpendiculaires aux axes longitudinaux des extrudeuses (10, 20, 30, 40).

5. Installation selon l'une des revendications 1 à 4, **caractérisée en ce qu'**au moins une plaque (201, 204) comporte un orifice traversant (211, 241) permettant de relier l'orifice de sortie d'une extrudeuse (10, 40) à la cavité d'une plaque adjacente (202, 203).

6. Installation selon l'une des revendications 1 à 5, **caractérisée en ce que** lesdites plaques (201, 202, 203, 204) sont amovibles et sont tenues ensemble sur un support commun pour former une tête d'extrusion sous forme d'un ensemble unitaire.

7. Installation selon la revendication 6, **caractérisée en ce que** ledit support et lesdites plaques forment une tête d'extrusion (50) interchangeable qui est reliée directement aux orifices de sortie des extrudeuses (10, 20, 30, 40).

8. Installation selon la revendication 6 ou 7, **caractérisée en ce que** la tête d'extrusion (50) formant un ensemble unitaire est mobile en bloc en translation entre une position entrée dans un support (90) de l'installation et une position sortie à l'extérieur de celui-ci.

9. Installation selon l'une des revendications 7 ou 8, **caractérisée en ce qu'**elle comprend des moyens de fixation rapide de la tête d'extrusion (50) sur ledit support (90).

10. Installation selon l'une des revendications précédentes, **caractérisée en ce que** les extrudeuses (10, 20, 30, 40) sont agencées de part et d'autre de la tête d'extrusion (50).

11. Installation selon l'une des revendications précédentes, **caractérisée en ce qu'**elle comprend quatre extrudeuses (10, 20, 30, 40) agencées deux par deux de part et d'autre de la tête d'extrusion (50) et que cette dernière comprend quatre plaques amovibles (201, 202, 203, 204) munies chacune d'au moins un canal de transfert (212, 222, 232, 242) du mélange en provenance d'une desdites extrudeuses vers une filière d'extrusion.

12. Procédé de fabrication de bande de profilé à base de plusieurs mélanges d'élastomères de composition différente par coextrusion à l'aide d'au moins deux extrudeuses d'alimentation en mélange d'élastomère (10, 20, 30, 40) d'une tête d'extrusion (50), **caractérisé en ce que**
- on choisit un jeu d'au moins deux plaques (201, 202, 203, 204) disposées côte-à-côte, chaque plaque comportant au moins une cavité possédant un orifice d'entrée qui communique avec un canal de transfert (15, 25, 35, 45, 212, 222, 232, 242) permettant de canaliser le mélange en provenance d'une extrudeuse (10, 20, 30, 40) dédiée vers une filière d'extrusion (60) qui permet la mise en forme du profilé et on agence lesdites plaques sensiblement transversalement à la direction de sortie du flux de mélange desdites extrudeuses (10, 20, 30, 40) au sein de la tête d'extrusion (50), de sorte que chaque plaque reçoit le flux de mélange par une face ayant plus grandes dimensions que la tranche de ladite plaque, à travers l'orifice d'entrée, selon une direction d'écoulement du flux entrant qui est parallèle à l'axe longitudinal de l'extrudeuse correspondante, et de sorte que ladite plaque oriente ledit flux dans le canal de transfert (15, 25, 35, 45, 212, 222, 232, 242) correspondant, qui est creusé dans l'épaisseur de la plaque, forme un angle compris entre 70 degrés et 110 degrés avec ladite direction d'écoulement du flux entrant, et longe la plaque en direction de la filière d'extrusion (60) ; et
- on réalise l'extrusion de la bande de produit profilé.

13. Procédé selon la revendication 12, **caractérisé en ce que** l'on agence lesdites plaques (201, 202, 203, 204) par rapport auxdites extrudeuses (10, 20, 30, 40) de manière à ce que l'orifice de sortie d'une extrudeuse communique sans changer de direction avec l'orifice d'entrée dans la cavité d'une plaque.

14. Procédé selon la revendication 12 ou 13, **caractérisé en ce qu'**au moins une plaque (201, 204) comporte un orifice traversant (211, 241) permettant de relier l'orifice de sortie d'une extrudeuse (10, 40) à la cavité d'une plaque adjacente (202, 203).

15. Procédé selon l'une des revendications 12 à 14, **caractérisé en ce que** l'on retire la tête d'extrusion (50) de l'installation et on la remplace avec une autre tête comportant un jeu de plaques (201, 202, 203, 204) différent de la première.

## Patentansprüche

1. Anlage zur Herstellung eines Profilstreifens auf der Basis mehrerer Elastomermischungen unterschiedlicher Zusammensetzung durch Koextrusion, welche mindestens zwei Extruder (10, 20, 30, 40) zur Versorgung eines Extrusionskopfes (50) mit Elastomermischung aufweist, wobei der Extrusionskopf eine Anordnung von mindestens zwei nebeneinander angeordneten Platten (201, 202, 203, 204) umfasst, wobei jede Platte mindestens einen Hohlraum aufweist, der eine Eintrittsöffnung besitzt, welche mit einem Transferkanal (15, 25, 35, 45, 212, 222, 232, 242) in Verbindung steht, der es ermöglicht, die von einem Extruder (10, 20, 30, 40) kommende Mischung zu einer Extrusionsdüse (60) hin zu kanalisieren, welche die Formgebung des Profils ermöglicht, wobei die Anlage **dadurch gekennzeichnet ist, dass** die Platten (201, 202, 203, 204) jeweils eine Seite aufweisen, die größere Abmessungen als die Schmalseite der Platte hat und die im Wesentlichen quer zur Austrittsrichtung der Mischungsströme der Extruder (10, 20, 30, 40) angeordnet ist, wobei diese Richtung parallel zur Längsachse des betreffenden Extruders ist und mit der Richtung der Eintrittsöffnung und somit mit der Strömungsrichtung des eintretenden Mischungsstroms zusammenfällt, derart, dass die Platte den Mischungsstrom über die Seite aufnimmt, die größere Abmessungen als die Schmalseite hat, und den Strom in den entsprechenden Transferkanal (15, 25, 35, 45, 212, 222, 232, 242) lenkt, wobei dieser Transferkanal, der in der Dicke der Platte ausgebildet ist, einen Winkel zwischen 70 Grad und 110 Grad mit der Strömungsrichtung des eintretenden Stroms bildet und entlang der Platte in Richtung der Extrusionsdüse (60) verläuft.

2. Anlage nach Anspruch 1, **dadurch gekennzeichnet, dass** die Austrittsöffnung eines Extruders direkt, ohne die Austrittsrichtung oder den Austrittsquerschnitt zu ändern, mit der Eintrittsöffnung in den Hohlraum einer Platte in Verbindung steht.

3. Anlage nach einem der Ansprüche 1 oder 2, **dadurch gekennzeichnet, dass** die Platten (201, 202, 203, 204) eben und zueinander parallel sind.

4. Anlage nach einem der Ansprüche 1 bis 3, **dadurch gekennzeichnet, dass** die Hohlräume Transferkanäle bilden, die sich in einer zu den Ebenen der Platten parallelen Richtung erstrecken, und dadurch, dass sich diese Transferkanäle in einer Richtung erstrecken, die zu den Längsachsen der Extruder (10, 20, 30, 40) senkrecht ist.

5. Anlage nach einem der Ansprüche 1 bis 4, **dadurch gekennzeichnet, dass** mindestens eine Platte (201, 204) eine Durchgangsöffnung (211, 241) aufweist, die es ermöglicht, die Austrittsöffnung eines Extruders (10, 40) mit dem Hohlraum einer benachbarten Platte (202, 203) zu verbinden.

6. Anlage nach einem der Ansprüche 1 bis 5, **dadurch gekennzeichnet, dass** die Platten (201, 202, 203, 204) lösbar sind und auf einem gemeinsamen Träger zusammengehalten werden, um einen Extrusionskopf in Form eines einheitlichen Ganzen zu bilden.

7. Anlage nach Anspruch 6, **dadurch gekennzeichnet, dass** der Träger und die Platten einen auswechselbaren Extrusionskopf (50) bilden, welcher direkt mit den Austrittsöffnungen der Extruder (10, 20, 30, 40) verbunden ist.

8. Anlage nach Anspruch 6 oder 7, **dadurch gekennzeichnet, dass** der Extrusionskopf (50), der ein einheitliches Ganzes bildet, insgesamt translatorisch bewegbar ist zwischen einer Position, in der er in einen Träger (90) der Anlage eingetreten ist, und einer Position, in der er aus diesem ausgetreten ist.

9. Anlage nach einem der Ansprüche 7 oder 8, **dadurch gekennzeichnet, dass** sie Mittel zur schnellen Befestigung des Extrusionskopfes (50) an dem Träger (90) umfasst.

10. Anlage nach einem der vorhergehenden Ansprüche, **dadurch gekennzeichnet, dass** die Extruder (10, 20, 30, 40) beiderseits des Extrusionskopfes (50) angeordnet sind.

11. Anlage nach einem der vorhergehenden Ansprüche, **dadurch gekennzeichnet, dass** sie vier Extruder (10, 20, 30, 40) umfasst, die paarweise beiderseits des Extrusionskopfes (50) angeordnet sind, und dass dieser Letztere vier lösbare Platten (201, 202, 203, 204) umfasst, die jeweils mit einem Kanal (212, 222, 232, 242) zum Transfer der von einem der Extruder kommenden Mischung zu einer Extrusionsdüse versehen sind.

12. Verfahren zur Herstellung eines Profilstreifens auf der Basis mehrerer Elastomermischungen unterschiedlicher Zusammensetzung durch Koextrusion mithilfe von mindestens zwei Extrudern (10, 20, 30, 40) zur Versorgung eines Extrusionskopfes (50) mit Elastomermischung, **dadurch gekennzeichnet, dass**
- ein Satz von mindestens zwei nebeneinander angeordneten Platten (201, 202, 203, 204) gewählt wird, wobei jede Platte mindestens einen Hohlraum aufweist, der eine Eintrittsöffnung besitzt, welche mit einem Transferkanal (15, 25, 35, 45, 212, 222, 232, 242) in Verbindung steht, der es ermöglicht, die von einem zugeordneten Extruder (10, 20, 30, 40) kommende Mischung zu einer Extrusionsdüse (60) hin zu kanalisieren, welche die Formgebung des Profils ermöglicht, und die Platten im Wesentlichen quer zur Austrittsrichtung des Mischungsstroms der Extruder (10, 20, 30, 40) im Inneren des Extrusionskopfes (50) angeordnet werden, derart, dass jede Platte den Mischungsstrom über eine Seite, die größere Abmessungen als die Schmalseite der Platte hat, durch die Eintrittsöffnung hindurch aufnimmt, in einer Strömungsrichtung des eintretenden Stroms, welche parallel zur Längsachse des betreffenden Extruders ist, und derart, dass die Platte den Strom in den entsprechenden Transferkanal (15, 25, 35, 45, 212, 222, 232, 242) lenkt, welcher in der Dicke der Platte ausgebildet ist, einen Winkel zwischen 70 Grad und 110 Grad mit der Strömungsrichtung des eintretenden Stroms bildet und entlang der Platte in Richtung der Extrusionsdüse (60) verläuft; und
- die Extrusion des Streifens des Profilprodukts durchgeführt wird.

13. Verfahren nach Anspruch 12, **dadurch gekennzeichnet, dass** die Platten (201, 202, 203, 204) in Bezug auf die Extruder (10, 20, 30, 40) so angeordnet werden, dass die Austrittsöffnung eines Extruders mit der Eintrittsöffnung in den Hohlraum einer Platte in Verbindung steht, ohne die Richtung zu ändern.

14. Verfahren nach Anspruch 12 oder 13, **dadurch gekennzeichnet, dass** mindestens eine Platte (201, 204) eine Durchgangsöffnung (211, 241) aufweist, die es ermöglicht, die Austrittsöffnung eines Extruders (10, 40) mit dem Hohlraum einer benachbarten Platte (202, 203) zu verbinden.

15. Verfahren nach einem der Ansprüche 12 bis 14, **dadurch gekennzeichnet, dass** der Extrusionskopf (50) aus der Anlage herausgezogen wird und durch einen anderen Kopf ersetzt wird, der einen anderen Satz von Platten (201, 202, 203, 204) aufweist als der erste.

## Claims

1. Installation for producing a profiled band based on several mixtures of elastomers of a different composition by means of coextrusion, comprising at least two extruders (10, 20, 30, 40) for supplying a mixture of elastomers to an extrusion head (50), the extrusion head comprising an assembly of at least two plates (201, 202, 203, 204) which are arranged side by side, each plate comprising at least one cavity which has an inlet hole communicating with a transfer channel (15, 25, 35, 45, 212, 222, 232, 242) which enables the mixture from an extruder (10, 20, 30, 40) to be channelled towards an extrusion die (60) by means of which the profile can be shaped, said installation being **characterized in that** the plates (201, 202, 203, 204) each have a face of larger dimensions than the edge of said plate, which is arranged substantially transversely relative to the output direction of the mixture flows of the extruders (10, 20, 30, 40), this direction being parallel to the longitudinal axis of the corresponding extruder and coinciding with the direction of the inlet hole and therefore with the direction of flow of the incoming mixture flow, so that the plate receives the mixture flow by said face of larger dimensions than the edge, and orients said flow in the corresponding transfer channel (15, 25, 35, 45, 212, 222, 232, 242), which transfer channel, cut into the thickness of the plate, forms an angle of between 70 degrees and 110 degrees with said direction of flow of the incoming flow and runs along the plate towards the extrusion die (60).

2. Installation according to Claim 1, **characterized in that** the outlet hole of an extruder communicates directly without changing either direction or outlet cross-section with the inlet hole in the cavity of a plate.

3. Installation according to either of Claims 1 and 2, **characterized in that** the plates (201, 202, 203, 204) are planar and mutually parallel.

4. Installation according to any one of Claims 1 to 3, **characterized in that** the cavities form transfer channels which extend in a direction parallel with the planes of the plates and **in that** the transfer channels extend in a direction perpendicular to the longitudinal axes of the extruders (10, 20, 30, 40).

5. Installation according to any one of Claims 1 to 4, **characterized in that** at least one plate (201, 204) comprises a through-hole (211, 241) which enables the outlet hole of an extruder (10, 40) to be connected to the cavity of an adjacent plate (202, 203).

6. Installation according to any one of Claims 1 to 5, **characterized in that** the plates (201, 202, 203, 204) are removable and are held together on a common support to form an extrusion head in the form of a unitary assembly.

7. Installation according to Claim 6, **characterized in that** the support and the plates form an interchangeable extrusion head (50) which is connected directly to the outlet holes of the extruders (10, 20, 30, 40).

8. Installation according to Claim 6 or 7, **characterized in that** the extrusion head (50) forming a unitary assembly can be moved in translation between a position introduced into a support (90) of the installation and a position removed therefrom.

9. Installation according to either of Claims 7 and 8, **characterized in that** it comprises means for rapidly fixing the extrusion head (50) to the support (90).

10. Installation according to any one of the preceding claims, **characterized in that** the extruders (10, 20, 30, 40) are arranged at one side and the other of the extrusion head (50).

11. Installation according to any one of the preceding claims, **characterized in that** it comprises four extruders (10, 20, 30, 40) which are arranged in pairs at one side and the other of the extrusion head (50) and **in that** it comprises four removable plates (201, 202, 203, 204) which are each provided with at least one transfer channel (212, 222, 232, 242) for the mixture from one of the extruders towards an extrusion die.

12. Method for producing a profiled band based on a plurality of mixtures of elastomers of different composition by means of coextrusion using at least two extruders which supply a mixture of elastomer (10, 20, 30, 40) to an extrusion head (50), **characterized in that**
- a set of at least two plates (201, 202, 203, 204) which are arranged side by side is selected, each plate comprising at least one cavity which has an inlet hole communicating with a transfer channel (15, 25, 35, 45, 212, 222, 232, 242) which enables the mixture from a dedicated extruder (10, 20, 30, 40) to be channelled towards an extrusion die (60) by means of which the profile can be shaped, and arranging said plates substantially transversely relative to the output direction of the mixture flow of the extruders (10, 20, 30, 40) within the extrusion head (50), so that each plate receives the mixture flow by a face of larger dimensions than the edge of said plate, through the inlet hole, in a direction of flow of the incoming flow which is parallel to the longitudinal axis of the corresponding extruder, and in such a way that said plate orients said flow in the corresponding transfer channel (15, 25, 35, 45, 212, 222, 232, 242), which is cut into the thickness of the plate, forms an angle of between 70 degrees and 110 degrees with said direction of flow of the incoming flow and runs along the plate towards the extrusion die (60); and
- the extrusion of the band of profiled product is carried out.

13. Method according to Claim 12, **characterized in that** the plates (201, 202, 203, 204) are arranged relative to the extruders (10, 20, 30, 40) so that the outlet hole of an extruder communicates without changing direction with the inlet hole in the cavity of a plate.

14. Method according to Claim 12 or 13, **characterized in that** at least one plate (201, 204) comprises a through-hole (211, 241) which enables the outlet hole of an extruder (10, 40) to be connected to the cavity of an adjacent plate (202, 203).

15. Method according to any one of Claims 12 to 14, **characterized in that** the extrusion head (50) is removed from the installation and it is replaced with another head which comprises a set of plates (201, 202, 203, 204) different from the first.
